# EUROPEAN PATENT SPECIFICATION

(11) **EP 2 570 558 B1**
(45) Date of publication and mention of the grant of the patent: **13.09.2017**
(21) Application number: 11780179.5
(22) Date of filing: 09.05.2011
(51) Int. Cl.: E03C 1/084, F16K 15/18, B05B 7/00

(54) **SUCTION CHECK VALVE USED IN FIELD OF WATERWAY**
SAUGRÜCKSCHLAGVENTIL FÜR WASSERSTRASSEN
CLAPET DE NON-RETOUR D'ASPIRATION UTILISÉ DANS LE DOMAINE DES VOIES D'EAU

(30) Priority: 11.05.2010 CN 201020185693 U; 11.05.2010 CN 201010167729
(43) Date of publication of application: 20.03.2013
(73) Proprietor: Xiamen Solex High-Tech Industries Co., Ltd., Xiamen, Fujian 361000 (CN); Zhou, Huasong, Fujian 361000 (CN)
(72) Inventor: ZHOU, Huasong, Xiamen Fujian 361000 (CN); JIANG, Li, Xiamen Fujian 361000 (CN); CHEN, Jianmin, Xiamen Fujian 361000 (CN); CAO, Bin, Xiamen Fujian 361000 (CN)
(74) Representative: Verscht, Thomas Kurt Albert
(86) International application number: PCT/CN2011/073807
(87) International publication number: WO 2011/140958

(56) References cited:
- WO-A2-03/044289
- CN-A- 1 333 706
- CN-A- 1 657 177
- CN-A- 101 956 414
- CN-U- 201 723 797
- CN-Y- 2 755 387
- US-A- 5 111 994
- US-A1- 2009 202 293

## Description

### Field of the invention

The present invention relates to a suction and non-return device for a waterway accessory.

### Background of the invention

The existing waterway accessory is applied with a suction mechanism, the bubbleformer for example. The existing suction mechanism is only disposed with air inlet function without water stop function or suction and non-return function. So it has disadvantages as below: in multi-functional shower, when the outlet function of the shower is switched to non-suction function, non-bubble function for example, the resistance of the waterway turns to be larger, the water flows backward and flows out through the suction hole, leading to inconvenient usage, water waste and low water pressure. US-A-2009/0202293 discloses: a suction and non-return device for a waterway accessory including the features of the preamble of claim 1.

### Summary of the invention

The present invention is provided with a suction and non-return device for a waterway accessory, which overcomes the problem of the existing technology that in the existing suction mechanism of a waterway accessory, the water is easily flowing out through the suction hole when the water in the waterway flows backward.

The technical proposal of the present invention to solve the problem is defined by a suction and non-return device for a waterway accessory according to claim 1. In a preferred embodiment, the elastic sealing sleeve is a packing leather. In another preferred embodiment, the main body includes:
A seat, which is disposed with a step hole and a first throughout hole inside, the step hole is disposed with a big and a small hole, the first throughout hole is running through the big hole inside and outside; and
An inner rack, the waterway is disposed in the inner rack, the inner rack is disposed with a second throughout hole, the second throughout hole is running through the mutation cavity of the waterway inside and outside;
The inner rack is assembled inside the big hole of the seat, the mutation cavity is connected to the small hole, the elastic sealing sleeve is sleeved outside the inner rack and disposed between the first throughout hole and the second throughout hole.

In another preferred embodiment, the sectional area of the mutation cavity is equal to that of the small hole.

In another preferred embodiment, the axis of the step hole and the axis of the waterway coincide.

In another preferred embodiment, the inner port of the second throughout hole is disposed in the root of the mutation cavity.

In another preferred embodiment, the outer side surface of the inner rack is disposed with a step surface; the step surface includes a big side surface and a small side surface;

The big side surface is sealing and fixed to the big hole, an assembly clearance is disposed between the small side surface and the inner side surface of the big hole, the assembly clearance is disposed between the first throughout hole and the second throughout hole, the sealing sleeve is disposed inside the assembly clearance.

In another preferred embodiment, the elastic sealing sleeve includes a connector and a horn sleeve extended from the connector downward and outward, the connector is fixed to the small side surface of the inner rack, the horn sleeve is disposed between the first throughout hole and the second throughout hole.

In another preferred embodiment, the seat is a ball, which includes a ball head and a connection part, the first throughout holes are symmetrically disposed in the ball head. Compared to the existing technology, the present invention has advantages below:
1. When the water in the waterway flows forward, negative pressure is generated in the mutation cavity and the mutation cavity acts on the elastic sealing sleeve, so that the air inlet hole is opened so as to suck air; When the water in the waterway flows backward, the water pressure in the waterway works on the inner surface of the elastic sealing sleeve to make the elastic sealing sleeve seal the air inlet hole. It overcomes the disadvantages of the existing technology, preventing water flowing out through the suction hole when the water in the waterway flows backward.
2. The elastic sealing sleeve is a packing leather, the sealing performance and the leaking stoppage are well when the water flows backward.
3. The main body includes a seat and an inner rack, the elastic sealing sleeve is disposed outside the inner rack and between the first throughout hole and the second throughout hole. The assembly is convenient, and the sealing sleeve is adsorbed or pressed with high accuracy of action.
4. As the inner port of the second throughout hole is disposed in the root of the mutation cavity, the absorbability is well to ensure the connection of the suction hole when negative pressure generates.
5. As the assembly clearance is disposed between the first throughout hole and the second throughout hole, the sealing sleeve is disposed inside the assembly clearance with activity space, the sealing sleeve is adsorbed or pressed with high accuracy of action.
6. As the horn sleeve is disposed between the first throughout hole and the second throughout hole, the sealing sleeve is adsorbed or pressed with high accuracy of action.

The present invention is provided with wide applicability, it can be applied in the ball, plug or other components of the sanitary ware.

### Brief description of the drawings

The present invention will be further described with the drawings and embodiments.
Fig.1 illustrates the partial breakdown structure of the first embodiment;
Fig.2 illustrates the breakdown structure of the first embodiment;
Fig.3 illustrates the cross sectional view of the inner rack of the first embodiment;
Fig.4 illustrates the cross sectional view of the elastic sealing sleeve of the first embodiment;
Fig.5 illustrates the cross sectional view of the first embodiment, when the water in the waterway accessory flows forward;
Fig.6 illustrates the cross sectional view of the first embodiment, when the water in the waterway accessory flows backward;
Fig.7 illustrates the partial breakdown structure of the second embodiment;
Fig.8 illustrates the breakdown structure of the second embodiment;
Fig.9 illustrates the cross sectional view of the second embodiment, when the water in the waterway accessory flows forward;
Fig. 10 illustrates the cross sectional view of the second embodiment, when the water in the waterway accessory flows backward;

### Detailed description of the embodiment

### The first embodiment

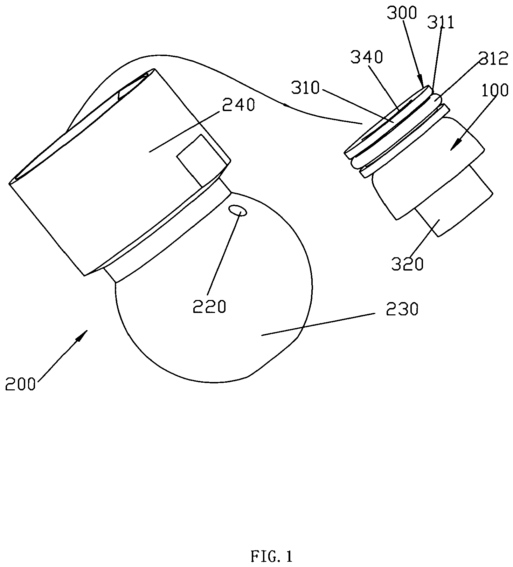

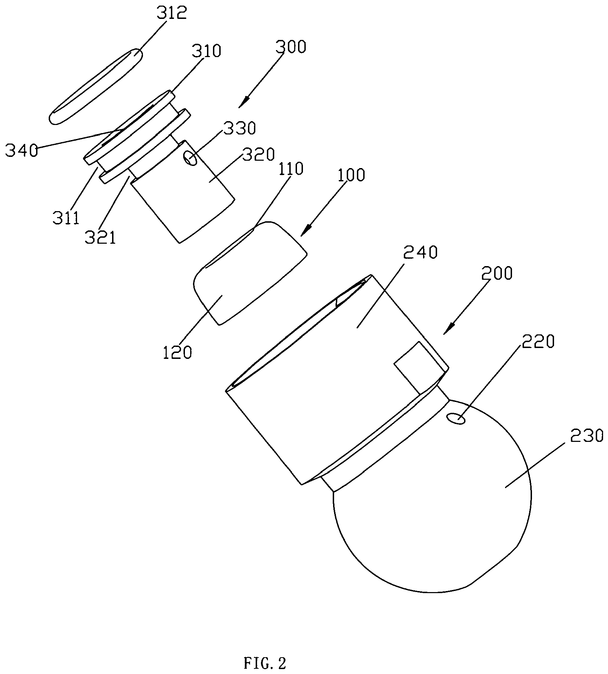

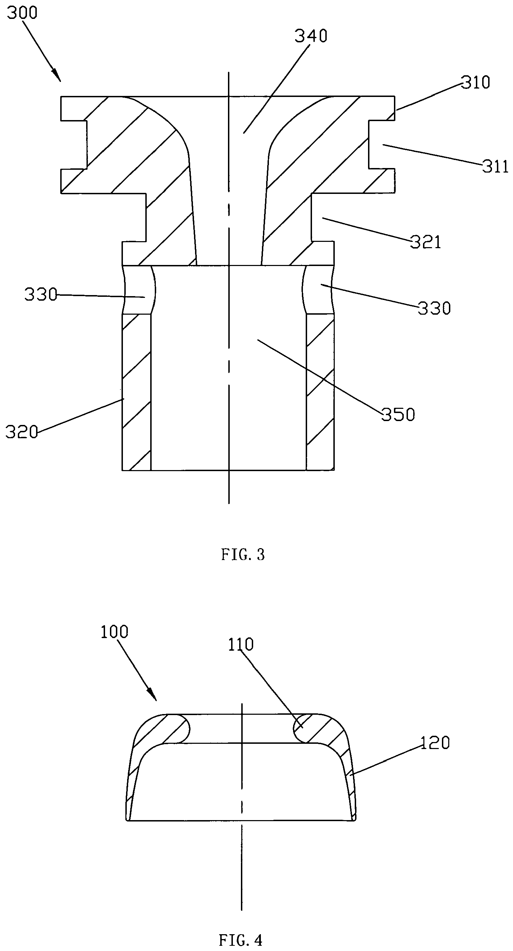

Refer to the fig.1 to fig.6. A suction and non-return device for a waterway accessory includes a main body and an elastic sealing sleeve 100.

The main body includes a seat 200 and an inner rack 300.

The seat 200 is disposed with a step hole and two first throughout holes 220 inside. The step hole is disposed with a big hole 211 and a small hole 212 ranged up and down. In this embodiment, the step hole is a hole of revolution surface. The upper of the big hole 211 is internal threaded.

The two first throughout holes 220 are symmetrical disposed, the first throughout holes 220 are running through the big hole 211 inside and outside, the axis of the first throughout holes 220 is inclined disposed, the outer port of the first throughout holes 220 is positioned in the outer of the seat 200, the inner port of the first throughout holes 220 is positioned in the inner of the big hole 211.

The outer of the inner rack is a revolution step surface, the step surface disposed with a big side surface 310 and a small side surface 320, the big side surface 310 is coupled to the inner side surface of the big hole 211 of the seat 200, the big side surface 310 is disposed with a first ring groove 311. The small side surface 320 is disposed with a second ring groove 321.

The inner rack 300 is disposed with a waterway and a second throughout hole 330 inside. The waterway is disposed with an water inlet hole 340 and a mutation cavity 350 connected to the water inlet hole 340 under the water inlet hole 340. The sectional area of the mutation cavity 350 is larger than that of the water inlet hole 340. The sectional area of the mutation cavity 350 is smaller than that of the small hole 212. the second throughout hole 350 is running through the mutation cavity 350 inside and outside, the outer port of the second throughout hole 350 is disposed in the small side surface 320, while the inner port in the root of the mutation cavity 350.

The inner rack 300 is disposed in the step hole of the seat 200. The big side surface 310 is sealing and fixed to the big hole 211. The first ring groove 311 is sleeved with an O-ring 312. With the O-ring 312, the sealing performance enhances. Thereinto: an assembly clearance 360 is disposed between the big side surface 320 and the inner side surface 211. The assembly clearance 360 is disposed between the first throughout hole 220 and the second throughout hole 330. The axis of the step hole is coincided with that of the waterway. The mutation cavity 350 is connected to the small hole 212. Preferred, a step is disposed between the big hole and the small hole, the step is coupled to the small side surface for convenient assembly and position.

In this embodiment, the first throughout hole 220, the first throughout hole 220, the assembly clearance 360 and the second throughout hole 330 are formed to be an air inlet hole, the air inlet is the outer port of the first throughout hole 220 and the air outlet is the inner port of the second throughout hole 330.

The elastic sealing sleeve 100 includes a connector 110 and a horn sleeve 120 extended from the connector 110 downward and outward, the horn sleeve 120 and the connector 110 form a chamfer angle, the centre of a circle of the chamfer angle is disposed inward and downward to prevent the elastic sealing sleeve 100 from adsorbed sealing to the outer port of the second throughout hole 330 when the elastic sealing sleeve 100 is adsorbed. The sealing sleeve 100 is a packing leather for example. The connector 110 is fixed to the second ring groove 321 of the small side surface 320 of the inner rack 300. The horn sleeve 120 is correspondingly positioned between the inner port of the first throughout hole 220 and the outer port of the second throughout hole 330.

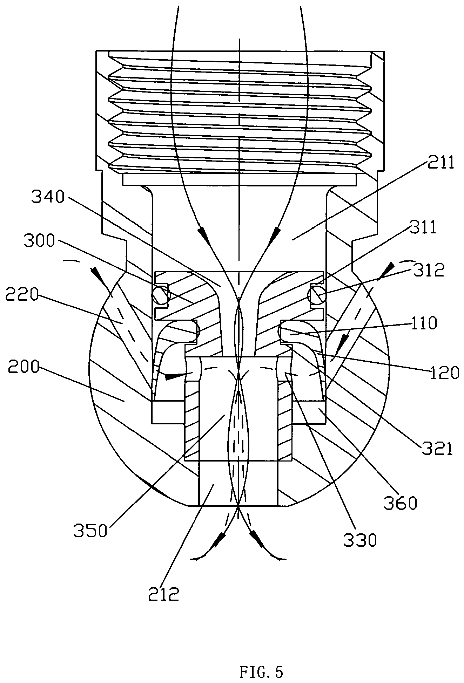

Refer to the fig.5. When the water in the waterway flows downward, negative pressure is generated in the mutation cavity 350 and the horn sleeve 120 of the elastic sealing sleeve 100 is adsorbed to make the elastic sealing sleeve 120 away from the inner port of the first throughout hole 220 with a clearance. Then the air inlet hole is connected and sucked air from outside.

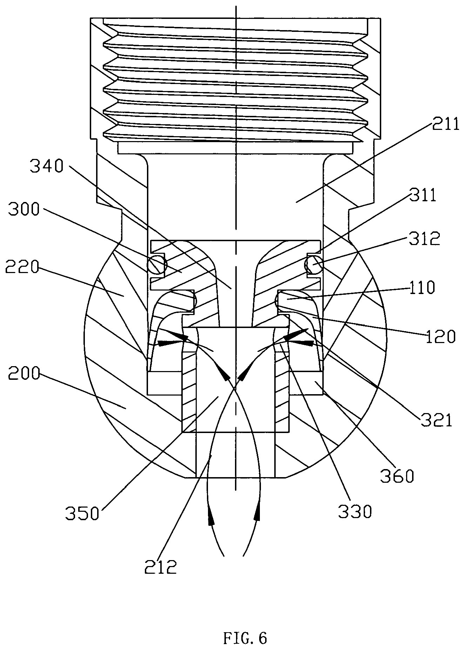

Refer to the fig.6. if the water in the waterway flows backward, the water pressure works on the inner side of the horn sleeve 120 of the elastic sealing sleeve 100 to make the elastic sealing sleeve 120 work on the inner port of the first throughout hole 220 to seal the air inlet hole.

The seat 200 is a ball including a ball head 230 and a connection part 240, the first throughout holes 210 are symmetrically disposed in the ball head.

### The second embodiment

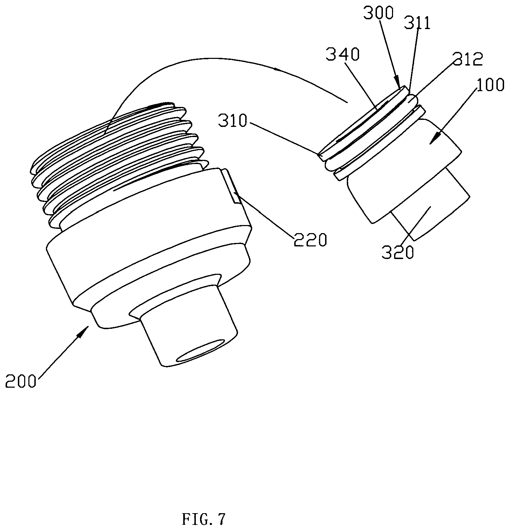

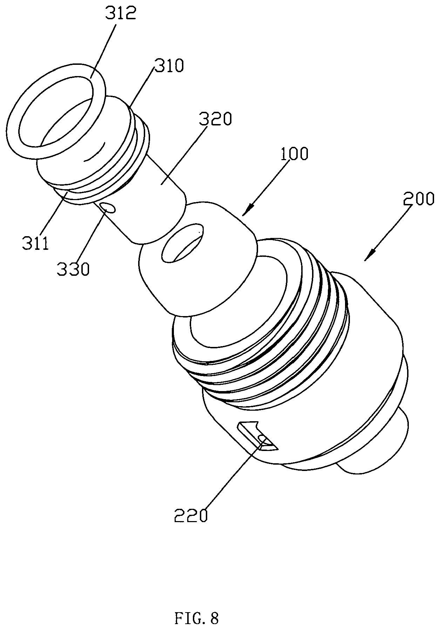

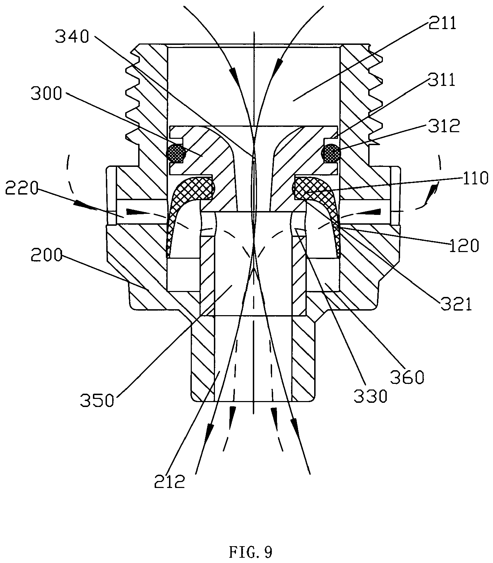

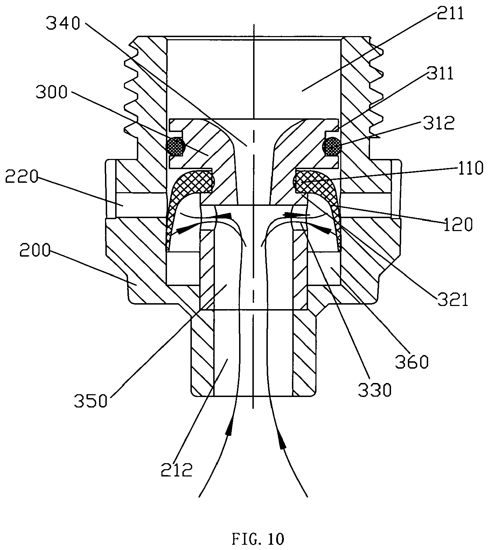

Refer to the fig.7 to fig.10. The difference the second embodiment from the first embodiment is that: the outer revolution surface of the upper of the seat 200 is external threaded; the axis of the first throughout holes 220 is horizontal disposed.

The seat 200 is a plug.

Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

### Industrial applicability

The present invention is provided with a suction and non-return device for a waterway accessory. When the water in the waterway flows forward, negative pressure is generated in the mutation cavity and the mutation cavity acts on the elastic sealing sleeve, so that the air inlet hole is opened so as to suck air; When the water in the waterway flows backward, the water pressure in the waterway works on the inner surface of the elastic sealing sleeve to make the elastic sealing sleeve seal the air inlet hole. The present invention is provided with wide applicability, it can be applied in the ball, plug or other components of the sanitary ware.

## Claims

1. A suction and non-return device for a waterway accessory, including:
a main body including a waterway and at least an air inlet hole; wherein the waterway is disposed with an water inlet hole (340) and a mutation cavity (350) connected to the water inlet hole (340), the sectional area of the mutation cavity (350) is larger than that of the water inlet hole (340); and
an elastic sealing sleeve (100), which is assembled inside the main body and coupled to the air inlet hole of the main body;
the suction and non-return device being configured,
when the water in the waterway flows forward, to generate negative pressure in the mutation cavity (350) such that the mutation cavity acts on the clastic sealing sleeve, so that the air inlet hole is opened so as to suck air;
the suction and non-return device being further configured such that, when the water in the waterway flows backward, the water pressure in the waterway works on the inner surface of the elastic sealing sleeve to make the elastic sealing sleeve seal the air inlet hole, **characterized in that**, the air inlet hole is formed by a first throughout hole (220), an assembly clearance (360) and a second throughout hole (330), the air inlet hole is disposed with an air inlet being the outer port of the first throughout hole (220),
the air inlet is disposed on an outer side of the main body, an air outlet being the inner port of the second throughout hole (330), the air outlet being disposed in the mutation cavity (350),

2. A suction and non-return device for a waterway accessory according to the claim 1, wherein the elastic sealing sleeve is a packing leather.

3. A suction and non-return device for a waterway accessory according to the claim 1 or claim 2, wherein the main body includes:
a seat (200), which is disposed with a step hole and the first throughout hole (220) inside, the step hole is disposed with a big (211) and a small hole (212), the first throughout hole is running through the big hole inside and outside; and
an inner rack (300), the waterway is disposed in the inner rack, the inner rack is disposed with the second throughout hole (330), the second throughout hole is running through the mutation cavity of the waterway inside and outside;
the inner rack is assembled inside the big hole of the seat, the mutation cavity is connected to the small hole, the elastic sealing sleeve is sleeved outside the inner rack and disposed between the first throughout hole and the second throughout hole.

4. A suction and non-return device for a waterway accessory according to the claim 3, wherein the sectional area of the mutation cavity is equal to that of the small hole.

5. A suction and non-return device for a waterway accessory according to the claim 3, wherein the axis of the step hole and the axis of the waterway coincide.

6. A suction and non-return device for a waterway accessory according to the claim 3, wherein the inner port of the second throughout hole is disposed in the root of the mutation cavity.

7. A suction and non-return device for a waterway accessory according to the claim 3, wherein the outer side surface of the inner rack is disposed with a step surface, the step surface includes a big side surface (310) and a small side surface (320);
the big side surface (310) is scaling and fixed to the big hole, an assembly clearance (360) is disposed between the small side surface (310) and the inner side surface of the big hole, the assembly clearance (360) is disposed between the first throughout hole (220) and the second throughout hole (330), the sealing sleeve (100) is disposed inside the assembly clearance.

8. A suction and non-return device for a waterway accessory according to the claim 7, wherein the elastic sealing sleeve (100) includes a connector (110) and a horn sleeve (120) extended from the connector (110) downward and outward, the connector is fixed to the small side surface (310) of the inner rack (300), the horn sleeve (120) is disposed between the first throughout hole (220) and the second throughout hole (330).

9. A suction and non-return device for a waterway accessory according to the claim 3, wherein the seat is a ball, which includes a ball head and a connection part, the first throughout holes are symmetrically disposed in the ball head.

## Patentansprüche

1. Saug- und Rückschlagvorrichtung für ein Wasserwegausrüstungsteil, die umfasst:
einen Hauptkörper mit einem Wasserweg und wenigstens einem Lufteinlassloch; wobei der Wasserweg mit einem Wassereinlassloch (340) und einem Veränderungshohlraum (350), der mit dem Wassereinlassloch (340) verbunden ist, versehen ist, wobei die Schnittfläche des Änderungshohlraums (350) größer als die des Wassereinlasslochs (340) ist; und
eine elastische Dichtungshülse (100), die ins Innere des Hauptkörpers montiert ist und mit dem Lufteinlassloch des Hauptkörpers gekoppelt ist;
wobei die Saug- und Rückschlagvorrichtung aufgebaut ist, um:
wenn das Wasser in dem Wasserweg vorwärts fließt, einen Unterdruck in dem Änderungshohlraum (350) zu erzeugen, so dass der Änderungshohlraum auf die elastische Dichtungshülse wirkt, so dass das Lufteinlassloch geöffnet wird, um Luft anzusaugen;
wobei die Saug- und Rückschlagvorrichtung ferner derart aufgebaut ist, dass, wenn das Wasser in dem Wasserweg rückwärts fließt, der Wasserdruck in dem Wasserweg auf die Innenoberfläche der elastischen Dichtungshülse wirkt, um die elastische Dichtungshülse das Lufteinlassloch abdichten zu lassen, **dadurch gekennzeichnet, dass** das Lufteinlassloch durch eine erstes Durchgangsloch (220), einen Montagespielraum (360) und ein zweites Durchgangsloch (330) ausgebildet ist, das Lufteinlassloch mit einem Lufteinlass versehen ist, der die Außenöffnung des ersten Durchgangslochs (220) ist,
wobei der Lufteinlass auf einer Außenseite des Hauptkörpers angeordnet ist, wobei ein Luftauslass die Innenöffnung des zweiten Durchgangslochs (330) ist, wobei der Luftauslass in dem Änderungshohlraum (350) angeordnet ist.

2. Saug- und Rückschlagvorrichtung für ein Wasserwegausrüstungsteil nach Anspruch 1, wobei die elastische Dichtungshülse eine Ledermanschette ist.

3. Saug- und Rückschlagvorrichtung für ein Wasserwegausrüstungsteil nach Anspruch 1 oder Anspruch 2, wobei der Hauptkörper umfasst:
ein Auflager (200), das mit einem Stufenloch und dem ersten Durchgangsloch (220) im Inneren versehen ist, wobei das Stufenloch mit einem großen (211) und einem kleinen Loch (212) versehen ist, wobei das erste Durchgangsloch innen und außen durch das große Loch verläuft; und
einen Innenrahmen (300), wobei der Wasserweg in dem Innenrahmen angeordnet ist, wobei der Innenrahmen mit dem zweiten Durchgangsloch (330) versehen ist, wobei das zweite Durchgangslochs innen und außen durch den Änderungshohlraum des Wasserwegs verläuft;
wobei der Innenrahmen im Inneren des großen Lochs des Auflagers montiert ist, wobei der Änderungshohlraum mit dem kleinen Loch verbunden ist, wobei die elastische Dichtungshülse außerhalb des Innenrahmens übergestülpt ist und zwischen dem ersten Durchgangsloch und dem zweiten Durchgangsloch angeordnet ist.

4. Saug- und Rückschlagvorrichtung für ein Wasserwegausrüstungsteil nach Anspruch 3, wobei die Schnittfläche des Änderungshohlraums gleich der des kleinen Lochs ist.

5. Saug- und Rückschlagvorrichtung für ein Wasserwegausrüstungsteil nach Anspruch 3, wobei die Achse des Stufenlochs und die Achse des Wasserwegs zusammenfallen.

6. Saug- und Rückschlagvorrichtung für ein Wasserwegausrüstungsteil nach Anspruch 3, wobei die Innenöffnung des zweiten Durchgangslochs in der Unterseite des Änderungshohlraums angeordnet ist.

7. Saug- und Rückschlagvorrichtung für ein Wasserwegausrüstungsteil nach Anspruch 3, wobei die Außenseitenoberfläche des Innenrahmens mit einer Stufenoberfläche versehen ist, wobei die Stufenoberfläche eine große Seitenoberfläche (310) und eine kleine Seitenoberfläche (320) umfasst;
wobei die große Seitenoberfläche (310) die Größe verändert und an dem großen Loch fixiert ist, ein Montagespielraum (360) zwischen der kleinen Seitenoberfläche (310) und der Innenseitenoberfläche des großen Lochs angeordnet ist, der Montagespielraum (360) zwischen dem ersten Durchgangsloch (220) und dem zweiten Durchgangsloch (330) angeordnet ist und die Dichtungshülse (100) im Inneren des Montagespielraums angeordnet ist.

8. Saug- und Rückschlagvorrichtung für ein Wasserwegausrüstungsteil nach Anspruch 7, wobei die elastische Dichtungshülse (100) einen Verbinder (110) und eine Trichterhülse (120), die sich von dem Verbinder (110) abwärts und auswärts erstreckt, umfasst, wobei der Verbinder an der kleinen Seitenoberf-läche (310) des Innenrahmens (300) fixiert ist und die Trichterhülse (120) zwischen dem ersten Durchgangsloch (220) und dem zweiten Durchgangsloch (330) angeordnet ist.

9. Saug- und Rückschlagvorrichtung für ein Wassenvegausrüstungsteil nach Anspruch 3, wobei das Auflager eine Kugel ist, die einen Kugelkopf und einen Verbindungsteil umfasst, wobei die ersten Durchgangslöcher symmetrisch in dem Kugelkopf angeordnet sind.

## Revendications

1. Dispositif d'aspiration et de non-retour pour un accessoire de passage d'eau, comprenant :
un corps principal comprenant un passage d'eau et au moins un orifice d'entrée d'air ; le passage d'eau étant pourvu d'un orifice d'entrée d'eau (340) et d'une cavité de mutation (350) reliée à l'orifice d'entrée d'eau (340), la section de la cavité de mutation (350) étant plus grande que celle de l'orifice d'entrée d'eau (340) ; et
un manchon d'étanchéité élastique (100) qui est monté dans le corps principal et qui est relié à l'orifice d'admission d'air du corps principal ;
le dispositif d'aspiration et de non-retour étant conçu,
quand l'eau qui se trouve dans le passage d'eau s'écoule vers l'avant, pour produire une pression négative dans la cavité de mutation (350) de telle sorte que la cavité de mutation agisse sur le manchon d'étanchéité élastique, de sorte que l'orifice d'admission d'air est ouvert de manière à aspirer de l'air ;
le dispositif d'aspiration et de non-retour étant également conçu de telle sorte que quand l'eau qui se trouve dans le passage d'eau s'écoule vers l'arrière, la pression de l'eau dans ledit passage agisse sur la surface intérieure du manchon d'étanchéité élastique pour amener celui-ci à rendre étanche l'orifice d'entrée d'air,
**caractérisé en ce que** l'orifice d'entrée d'air est formé par un premier orifice traversant (220), un espace d'assemblage (360) et un second orifice traversant (330), l'orifice d'entrée d'air étant pourvu d'une entrée d'air qui constitue une ouverture extérieure du premier orifice traversant (220),
l'entrée d'air est disposée sur un côté extérieur du corps principal, une sortie d'air constituant l'ouverture intérieure du deuxième orifice traversant (330), ladite sortie d'air étant disposée dans la cavité de mutation (350).

2. Dispositif d'aspiration et de non-retour pour un accessoire de passage d'eau selon la revendication 1, dans lequel le manchon d'étanchéité élastique est un cuir pour joints hydrauliques et emboutis.

3. Dispositif d'aspiration et de non-retour pour un accessoire de passage d'eau selon la revendication 1 ou la revendication 2, dans lequel le corps principal comprend :
un siège (200) qui est pourvu d'un orifice étagé et du premier orifice traversant (220), l'orifice étagé étant pourvu d'un grand orifice (211) et d'un petit orifice (212), le premier orifice traversant passant à travers le grand orifice à l'intérieur et à l'extérieur ; et
un support intérieur (300), le passage d'eau étant disposé dans le support intérieur, le support intérieur étant pourvu du second orifice traversant (330), le second orifice traversant passant à travers la cavité de mutation du passage d'eau à l'intérieur et à l'extérieur ;
le support intérieur étant monté à l'intérieur du grand orifice du siège, la cavité de mutation étant reliée au petit orifice, le manchon d'étanchéité élastique étant enfilé sur l'extérieur du support intérieur et étant disposé entre le premier orifice traversant et le second orifice traversant.

4. Dispositif d'aspiration et de non-retour pour un accessoire de passage d'eau selon la revendication 3, dans lequel la section de la cavité de mutation est égale à celle du petit orifice.

5. Dispositif d'aspiration et de non-retour pour un accessoire de passage d'eau selon la revendication 3, dans lequel l'axe de l'orifice étagé et l'axe du passage d'eau coïncident.

6. Dispositif d'aspiration et de non-retour pour un accessoire de passage d'eau selon la revendication 3, dans lequel l'ouverture intérieure du second orifice traversant est disposée à la base de la cavité de mutation,

7. Dispositif d'aspiration et de non-retour pour un accessoire de passage d'eau selon la revendication 3, dans lequel la surface du côté extérieur du support intérieur est pourvue d'une surface étagée, ladite surface étagée comprenant une grande surface latérale (310) et une petite surface latérale (320) ;
la grande surface latérale (310) réalise l'étanchéité et est fixée au grand orifice, un espace d'assemblage (360) est disposé entre la petite surface latérale (310) et la surface latérale intérieure du grand orifice, l'espace d'assemblage (360) est disposé entre le premier orifice traversant (220) et le second orifice traversant (330), le manchon d'étanchéité (100) est disposé à l'intérieur de l'espace d'assemblage.

8. Dispositif d'aspiration et de non-retour pour un accessoire de passage d'eau selon la revendication 7, dans lequel le manchon d'étanchéité élastique (100) comprend un raccord (110) et un manchon en cornet (120) qui s'élargit à partir du raccord (110) vers le bas et vers l'extérieur, le raccord est fixé à la petite surface latérale (310) du support intérieur (300), le manchon en cornet (120) est disposé entre le premier orifice traversant (220) et le second orifice traversant (330).

9. Dispositif d'aspiration et de non-retour pour un accessoire de passage d'eau selon la revendication 3, dans lequel le siège est une bille, qui comprend une tête de bille et une partie de liaison, les premiers orifices traversants sont disposés symétriquement dans la tête de bille.
